## Europäisches Patentamt

## European Patent Office

## Office européen des brevets

(11) Veröffentlichungsnummer: **0 092 068**
**B1**

# EUROPÄISCHE PATENTSCHRIFT

(45) Veröffentlichungstag der Patentschrift:
**11.06.86**

(51) Int. Cl.⁴: **G 01 N 27/12, G 08 B 17/10**

(21) Anmeldenummer: **83103026.7**

(22) Anmeldetag: **26.03.83**

(54) **Alarmanlage für Gase und/oder Dämpfe.**

(30) Priorität: **15.04.82 CH 2290/82**

(43) Veröffentlichungstag der Anmeldung:
**26.10.83 Patentblatt 83/43**

(45) Bekanntmachung des Hinweises auf die Patenterteilung:
**11.06.86 Patentblatt 86/24**

(84) Benannte Vertragsstaaten:
**CH DE FR GB IT LI NL**

(56) Entgegenhaltungen:
DE - A - 2 313 413
FR - A - 2 263 513
FR - A - 2 380 542
FR - A - 2 383 440
US - A - 4 088 986

THE RADIO AND ELECTRONIC ENGINEER, Band 44, Nr. 2, Februar 1974, Seiten 85-91, London, G.B. J. WATSON et al.: "Applications of the Taguchi gas sensor to alarms for inflammable gases"

(73) Patentinhaber: **CERBERUS AG, Alte Landstrasse 411, CH-8708 Männedorf (CH)**

(72) Erfinder: **Ulli, Hanspeter, Hofackerstrasse 74, CH-8032 Zürich (CH)**
Erfinder: **Reis, Alfons, Dr., Kreuzstrasse 25, CH-8712 Stäfa (CH)**
Erfinder: **Troup, Alan, Dr., Heerweg 30, CH-8708 Männedorf (CH)**
Erfinder: **Pfister, Gustav, Dr., Stationsstrasse 10, CH-8712 Uerikon (CH)**
Erfinder: **Bukowiecki, Stanislaw, Dr., Schwarzbachstrasse 30, CH-8713 Uerikon (CH)**

(74) Vertreter: **Tiemann, Ulrich, Dr.-Ing. et al, c/o Cerberus AG Patentabteilung Alte Landstrasse 411, CH-8708 Männedorf (CH)**

## Beschreibung

Die Erfindung betrifft eine Alarmanlage zum Detektieren von Gaskomponenten, enthaltend mindestens ein Sensorelement, das mittels einer Heizeinrichtung auf unterschiedliche Temperaturen geheizt wird, und einer Auswerteschaltung zur Alarmgabe.

Da in der heutigen Zeit die Gefährdung und Verschmutzung der Umwelt immer grössere Ausmasse annehmen, müssen die organischen Lebewesen immer mehr vor toxischen und explosiven Gasen bzw. chemischen Dämpfen geschützt werden. Ein solcher Schutz ist besonders in der chemischen Industrie, in Verkehrsanlagen wie Garagen, Tunnels oder Heizanlagen besonders dringlich. Allerdings ist ein solcher Schutz ohne vorherige Warnung nicht denkbar. Es haben sich als Sensoren für solche Warnzwecke bereits Metalloxid-Halbleiter recht gut eingeführt, die im erhitzten Zustand auf in ihrer Umgebung befindliche toxische und/oder reduzierende Gase bzw. Dämpfe sowie Wasser mit einer Aenderung der Leitfähigkeit reagieren. Die Leitfähigkeitsänderung wird als Indikator der vorhandenen integralen Gas- bzw. Dampfkonzentration benutzt.

Ebenfalls werden für den Nachweis explosiver Dämpfe oder Gase mit Katalysator imprägnierte Metalloxid-Perlen verwendet, mit denen man die durch die Verbrennung der umgebenden Luft an der heissen Oberfläche der Perle erzeugte Temperaturerhöhung misst und so das Vorhandensein brennbarer Gase feststellt.

Weiterhin ist aus Forschungsberichten erkennbar, dass Gassensoren basierend auf Siliziumtechnologie entwickelt werden, die sogenannte Gas-FET's oder CHEMFET's, welche sich besonders für den Nachweis von explosiven Gasen, wie Wasserstoff, oder giftigen Gasen, wie Kohlenmonoxid, eignen sollen (vgl. NTG Fachberichte, Band 79, 1982).

Auch ist erwähnt worden, dass pyroelektrische Elemente, z.B. aus $LiTaO_3$, genügend empfindlich sind, um Temperaturvariationen feststellen zu können, welche durch Desorption von Gasen von der Oberfläche des Sensorelementes erzeugt werden (Chemically Sensitive Devices, Elsevier, 1980).

Die als Beispiel hier angegebenen Sensoren werden bei erhöhter konstanter Temperatur betrieben, welche einerseits durch die Ansprechzeit und Abkühlungszeit, andererseits durch das noch zu messende Gas bestimmt ist. Obschon durch den Wert der konstanten Temperatur eine gewisse Bevorzugung des Nachweises einzelner Gase erzeugt werden kann, geben die auf diese Art betriebenen Sensoren keine Auskunft darüber, um welche Gaskomponente oder um welche chemischen Dämpfe es sich hierbei handelt. Man spricht in diesem Fall von einem "breitbandigen" Ansprechverhalten eines solchen Sensors. Beispielsweise erzeugen gewisse (harmlose) Konzentrationen von Wasserstoff eine Aenderung des elektrischen Leitwertes eines Metalloxid-Halbleiter-Gassensors von gleichem Wert wie eine hohe (gefährliche) Konzentration von Methangas. Eine Folge davon ist unter anderem die Vortäuschung eines Gefahrenzustandes mit den dadurch oft recht hohen Folgekosten (Evakuierung, produktionsstop usw.). Es besteht daher das Bedürfnis, einzelne gefährliche Gase selektiv nachzuweisen. In der praxis wurde diese Forderung dadurch erfüllt, dass spezielle Gas-Sensoren für ein bestimmtes Gas (z.B. selektiver $H_2S$-Sensor) oder für einen bestimmten Dampf hergestellt wurden oder dass ein Metalloxid-Halbleiter mit vorgeschalteten Filtern, die unerwünschte Gase abblocken, ausgerüstet ist. Nachteilig ist hierbei, dass durch eine solche absolute Selektivität andere Komponenten, die sich gleichzeitig in der Umgebung befinden, nicht erfasst werden. Bisher beschränkte man sich daher auch nur auf die Suche nach einer einzigen Gas- oder Dampf-Komponente in der Umgebung. Andere, eventuell vorkommende Komponenten wurden hierbei vollkommen unberücksichtigt gelassen. Daher sind schon Vergiftungserscheinungen oder Explosionen ohne Ansprechen der Warnanlage aufgetreten.

In der DE-A- 2 313 413 wird die Bestimmung des Gehaltes der CO- bzw. $CH_4$-Komponente in einem Gasgemisch beschrieben. Die Sensorsignale werden bei unterschiedlichen Temperaturen erhalten und ausgewertet, wobei die Werte bei niedrigen Temperaturen, z.B. Raumtemperatur, zur CO-Bestimmung und die bei höheren Werte zur $CH_4$-Bestimmung dienen. Der Metalloxid-Halbleiter wird durch einen Heizdraht auf eine vorgegebene Temperatur aufgeheizt. Nach der unkontrollierten Abkühlung auf die Raumtemperatur erfolgt die Messung, die in einer nachgeschalteten elektronischen Auswerteschaltung differenziert und integriert wird. Diese Auswertung erfolgt nur in den Zeitabschnitten, in denen keine Messung durchgeführt wird. Nachteilig bei dieser Methode ist, dass während des Abkühlens verschiedene Gase an der Oberfläche des HL-Elementes angelagert werden können, die dann ein CO- oder $CH_4$-ähnliches Signal erzeugen. Ebenfalls lässt sich mit dieser Methode, bei welcher der Gasnachweis bei konstanter Temperatur erfolgt (etwa Raumtemperatur), höchstens nur ein Gas selektiv nachweisen. Hierbei ist das Mass der Selektivität gemäss dem Vorhergesagten nicht gewährleistet.

In der FR-A-2 263 513 wird ein Gassensor aus Metalloxid-Halbleitermaterial beschrieben, dessen Sensorelement mittels einer Heizeinrichtung abwechselnd auf hohe Temperatur (200° - 310°C) zu seiner Reinigung und auf eine niedrige Temperatur (Raumtemperatur und etwas darüber) zum Messen von CO- bzw Propan-Gehalt geheizt. Die Messwerte werden in einer nachfolgenden Schaltung zur Alarmgabe ausgewertet. Die Messung erfolgt nur in niedrigen Temperaturbereich, nachdem das Sensorelement sich unkontrolliert abgekühlt hat.

Nachteilig ist hier ebenfalls, dass während des Abkühlens sich verschiedene Gase an der Oberfläche des Sensorelementes anlagern können, welche dann ein CO- oder Propan-ähnliches Messignal erzeugen.

Die Aufgabe der Erfindung besteht darin, die Nachteile der bekannten Vorrichtungen zur Bestimmunge von Gasen zu vermieden und den breitbandigen Empfindlichkeitsbereich, insbesondere von auf Metalloxid basierenden Gassensoren voll auszunutzen, jedoch gleichzeitig einzelne Gase, Dämpfe oder Gasarten selektiv nachzuweisen. Die hierzu notwendige Anlage, bestehend aus einem oder mehreren Gassensoren, z.B. aus Metalloxid-Halbleitern, und einer elektronischen Auswerteschaltung, soll mit einfachen Bauteilen kostengünstig herstellbar sein.

Die Aufgabe der Erfindung wird durch die im Patentanspruch 1 definierten Merkmale gelöst.

Ein Ausführungsbeispiel der Erfindung wird anhand der Zeichnungen näher erläutert. Es zeigen:

Fig. 1 die graphische Darstellung der Aenderung der elektrischen Eigenschaften eines Metalloxid-Halbleiters unter Einwirkung bestimmter Temperaturzyklen bei verschiedenen Gasen und Dämpfen;

Fig. 2 die elektronische Schaltung zur Steuerung der Heizung des Metalloxid-Halbleiters und zur Auswertung der seine elektrischen Eigenschaften darstellenden Ausgangssignale;

Fig. 3a-e verschiedene Muster der Aenderungen der Heizspannung während mehrerer Aufheiz- und Abkühlzyklen des Metalloxid-Halbleiters;

Fig. 4 eine graphische Darstellung eines Ausgangssignals für verschiedene Gase mit ihren Ansprechkurven.

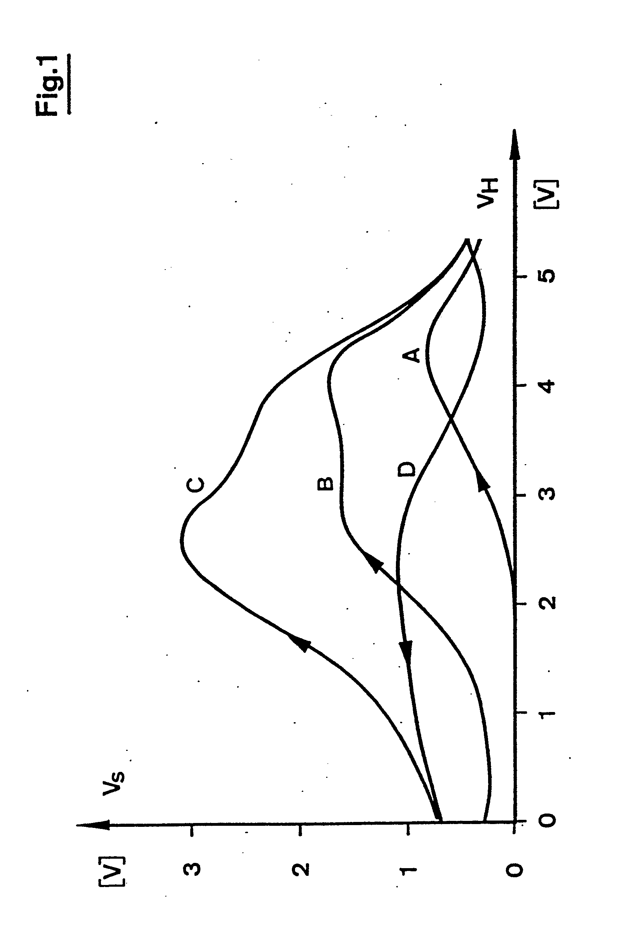

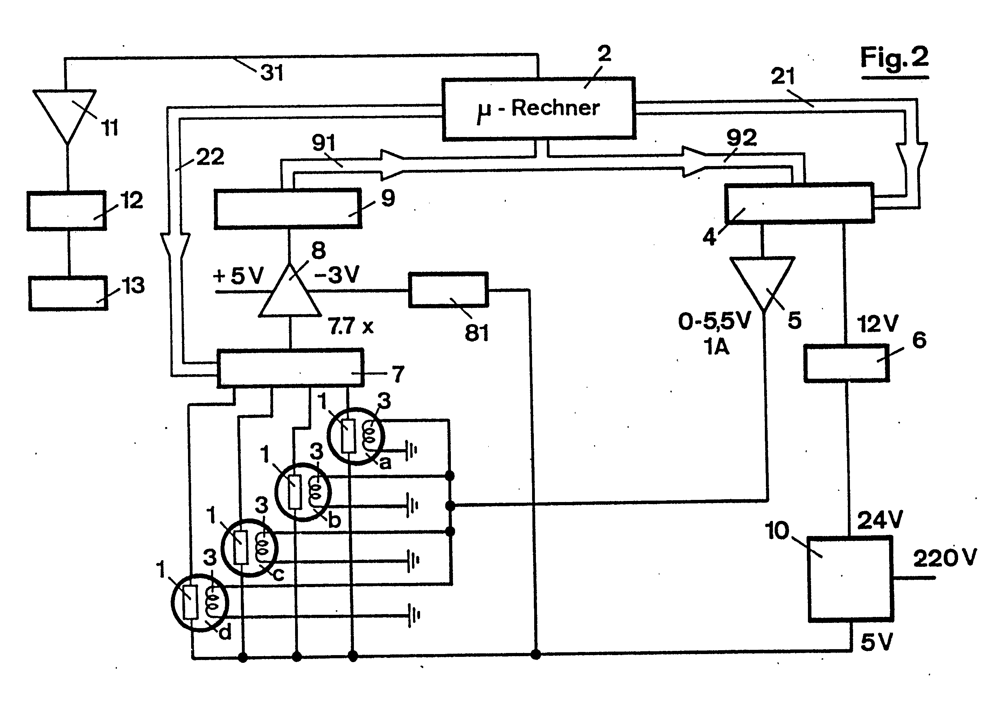

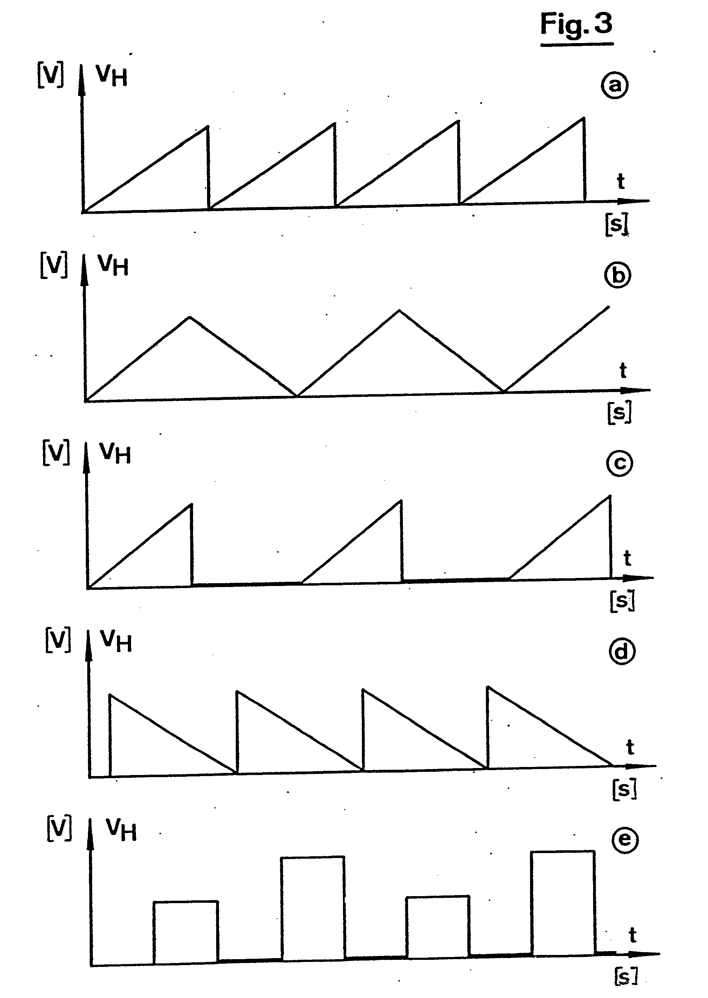

Auf der Abszisse der Figur 1 ist die Heizspannung $V_H$ (in Volt) eingetragen, die zum Aufheizen des Metalloxid-Halbleiters 1 mit dem Heizwiderstand 3 der Figur 2 dient. Diese Heizspannung erzeugt im Metalloxid-Halbleiter 1 eine Temperatur, die im Bereich von Zimmertemperatur bis 500°C liegt. Hiermit ist der gesamte Empfindlichkeitsbereich abgedeckt. Auf der Ordinate der Figur 1 sind die Spannungssignale $U_{sig}$ (in mV) angegeben, die als Ausgangssignale eines Metalloxid-Halbleiters 1 erzeugt werden. Diese Signale sind proportional zum elektrischen Leitwert des Metalloxid-Halbleiter-Sensors, welcher sich unter Einwirkung der in seiner Umgebung vorhandenen Gase bzw. Dämpfe und seines Temperaturzustandes ändert. Die Signale werden in der Schaltungsanordnung der Figur 2 ausgewertet. In ähnlicher Weise werden durch die Gasatmosphäre erzeugte Temperaturänderungen ausgewertet, wenn es sich um einen Sensor handelt, welcher die Verbrennungswärme anstelle der Aenderung des elektrischen Leitwertes feststellt. Dieser Auswertevorgang wird später im Zusammenhang mit der Figur 2 besprochen. Bei der Kurve A der Figur 1 handelt es sich um normale Luft. Die Erhöhung des Signals im Bereich der Heizspannung $V_H$ von 4 bis 5 Volt hängt von der Luftfeuchtigkeit ab und kann somit zur Bestimmung der Luftfeuchtigkeit ausgewertet werden, Der Temperaturzyklus des Metalloxid-Halbleiters, der durch die Heizspannung gesteuert wird, wandert bis zu einem oberen Schwellwert und dann wieder zurück zum Anfangswert von 0 Volt. Für die Aufnahme der Kurve A wurde der in Fig. 3a angegebene Temperaturzyklus gewählt, wobei die Zykluszeit 60 Sekunden war. Die Kurven B, C und D zeigen das Vorhandensein von Kohlenmonoxid (CO) in einer Menge von 400 ppm in der Umgebungsluft an. Die unterschiedlichen Formen ergeben sich durch verschiedene Muster des Temperaturzyklus. Man erkennt daraus die eminente Bedeutung des Temperaturzyklus während der Aufheizung und Abkühlung des Metalloxid-Halbleiters. Es zeigt sich, dass durch Wahl des Temperaturzyklus die Ansprechcharakteristik für bestimmte Gase optimiert werden kann. Dies zeigt besonders die Kurve C der Figur 1 im Vergleich zur Kurve B. Bei der Kurve C ist der Spitzenwert wesentlich deutlicher hervorgehoben als bei Kurve B, obwohl beide Kurven die gleiche Konzentration, nämlich 400 ppm CO in Luft anzeigen. Die Kurve B wurde mit dem gleichen Temperaturzyklus nach Fig. 3a erzeugt, welcher für die Aufnahme des Untergrundes (Kurve A) verwendet wurde. Die Kurve C wurde mit einem Temperaturzyklus erzeugt, dessen Heizspannung den in Figur 3b gezeigten Verlauf hat. Für den ansteigenden und absteigenden Ast des Heizzyklus wurden je 60 Sekunden gewählt. Die Kurve D wurde mittels einer Heizspannung erzeugt, deren Verlauf in Figur 3d gezeigt ist (Zykluszeit 60 Sekunden).

Die Form der Kurven in Fig. 1 hängt weiter sehr stark von den Zykluszeiten für die ansteigenden bzw. absteigenden Heizspannungsrampen ab. Die Zykluszeit ihrerseits wird durch den geometrischen Aufbau des Sensors bestimmt. Für die im Ausführungsbeispiel verwendeten Sensoren erschien eine Zykluszeit von 60 Sekunden als optimal. Schnellere Zykluswerte können mit miniaturisierten Sensoren mit besserer Wärmekopplung zwischen Sensorheizung 3 und Sensormaterial 1 (Fig. 2) erzeugt werden.

In Fig. 2 ist eine Ausführung der elektronischen Schaltung wiedergegeben, wie sie für den Betrieb von zum Beispiel vier Sensoren a, b, c, d benutzt wird. Ohne weiteres können Sensoren in beliebiger Anzahl verwendet werden. Die Sensoren können in einem Raum an verschiedenen Orten oder in mehreren äumen angeordnet sein. Die Sensoren können ausgebildet ein als Metalloxid-Halbleiter mit oder ohne Katalysatoren, als Metalloxidkeramik-Perlen (Wärmeeffekt), als MOS-Transistor oder MIS-Diode oder als pyroelektrisches Element mit gasabsorbierender Schicht.

Im Ausführungsbeispiel der Fig. 2 sind Metalloxid-Halbleiter, z.B. aus Zinndioxid mit Katalysatorzusätzen, z.B. Platin oder Palladium, dargestellt. Jeder Metalloxid-Halbleiter a, b, c, d besteht aus einem Heizwiderstand 3 aus einem Widerstand 1 der Metalloxidkeramik. Der Mikrorechner 2 steuert über den Datenbus 21, Digital-Analog-Wandler 4 und Verstärker 5 die Heizleistung für jeden der Sensoren. Die Heizspannung VH wird nach einem im Mikrorechner 2 programmierten Muster variiert. Beispiele hierfür sind in den Figuren 3a - 3e gezeigt. In der Fig. 2 erhalten alle vier Sensoren die gleiche Heizleistung und das gleiche Temperaturmuster. Selbstverständlich kann jeder Heizwiderstand 3 der vier Sensoren a, b, c, d individuell mit einem Verstärker 5 verbunden sein, so dass jeder Sensor sein eigenes, vom Rechner 2 programmiertes Temperaturmuster empfangen kann. Der Digital-Analog-Wandler 4 erhält seine Stromversorgung aus dem Spannungsregulator 6, der am Versorgungsgerät 10 angeschlossen ist. Dieses Gerät kann z.B. ein Transformator sein, der die normale Netzspannung von z.B. 220 V auf die erforderliche Spannung von 24 V heruntertransformiert. Die Sensoren a-d sind der Umgebungsluft ausgesetzt. Während des gesamten Temperaturzyklus wird der elektrische Leitwert jedes Sensors durch kontinuierliches Messen der elektrischen Widerstände 1 der Metalloxidkeramik als Signale festgestellt.

Diese Ausgangssignale bzw. Sensorsignale werden der Reihe nach vom Analogschalter 7 abgetastet und über den Verstärker 8 und Analog-Digital-Wandler 9 dem Mikrorechner 2 über den Datenbus 91 zugeführt. Der Rechner 2 steuert diese Abtastung über den Datenbus 22. Im Rechner werden die Sensorsignale so verarbeitet, dass sich Kurven ergeben, wie sie z.B. in der Fig. 1 dargestellt sind. Diese Kurven werden mit vorprogrammierten, im Rechner gespeicherten Ansprechmustern verglichen. Hierbei wird auch der Temperaturzyklus berücksichtigt, mit dem der entsprechende Sensor aufgeheizt wird. Sollten sich bei dem Vergleich Mehrdeutigkeiten ergeben, so steuert der Rechner 2 über den Datenbus 21, Digital-Analog-Wandler 4 und Verstärker 5 die Heizwiderstände 3 so an, dass sich ein anderer Temperaturzyklus ergibt. Dies erfolgt so lange bis der Vergleich im Rechner 2 zu einem eindeutigen Ergebnis geführt hat. Ein solches Ergebnis wird z.B. über die Leitung 31 zum Verstärker 11 und zur Anzeigevorrichtung bzw. zum Drucker 12 geführt. Dort werden das aufgefundene Gas oder die Dämpfe angezeigt und gefährliche Konzentrationen durch die Alarm gebende Stufe 13 kenntlich gemacht. Das Ausführungsbeispiel der Fig. 2 zeigt am Gerät 10 eine Messpannung von 5 V für die Erzeugung der Sensorsignale an den Metalloxid widerständen 1. Diese Spannung kann natürlich auch erhöht werden. Eine solche Spannungserhöhung bringt eine Steigerung des selektiven Nachweises des Gases bzw. der Dämpfe. Eine Aenderung dieser Messpannung für die Metalloxidwiderstände 1 muss in den Rechner 2 gegeben werden, der dies ebenfalls bei seinen verschiedenen Vergleichen zu berücksichtigen hätte. Dies ist in der Fig. 2 nicht eingezeichnet worden, damit das gezeichnete Ausführungsbeispiel übersichtlich bleibt. Der Spannungswandler 81 versorgt den Verstärker 8 mit den für diesen Bauteil notwendigen -3 V.

In den Figuren 3a - 3e sind als Beispiele verschiedene Muster von Temperaturzyklen dargestellt.

Die Fig. 3a zeigt den kontinuierlichen Anstieg der Heizspannung VH auf 5 Volt. Anschliessend wird die Heizspannung auf 0 Volt reduziert. Die Temperatur des Gassensors ändert sich in Abhängigkeit der Heizspannung. Dies hängt von der Kopplung zwischen dem Metalloxidwiderstand 1 und dem Material des Sensorelementes ab. Auf der Abszisse der Fig. 3a ist die Zeit t in Sekunden eingetragen. Wie bereits im Zusammenhang mit der Fig. 1 gesagt, erfolgt die Erhöhung und der Abfall der Heizspannung in 60 Sekunden. In der Fig. 3a erfolgt sofort der nächste Anstieg der Heizspannung auf den gleichen Maximalwert von 5 Volt. Anschliessend fällt die Heizspannung zurück auf 0 Volt. Der Gassensor wird in mehreren Zyklen aufgeheizt und abgekühlt. Die Steuerung erfolgt, wie bereits im Zusammenhang mit der Fig. 2 gesagt, durch den Rechner 2. Dieser Rechner kann den ansteigenden Ast oder den absteigenden Ast der Heizspannung VH variieren. Es können grössere oder kleinere Spannungswerte bzw. Zeiten t verwendet werden. Dies richtet sich nach der Auswertung der Sensorsignale in der Schaltung der Fig. 2.

Die Fig. 3b zeigt, dass der ansteigende und der absteigende Ast der Heizspannung $V_H$ gleich lang sind und auch die gleiche Steigung aufweisen. Das Aufheizen des Metalloxidwiderstandes 1 des Gassensors und die Reduzierung der Heizspannung betragen in diesem Beispiel 60 Sekunden. Daran schliesst sich sofort der nächste Aufheizvorgang. Auch hier kann der Rechner 2 Aenderungen sowohl in den Spannungswerten als auch in der Form des Aufheizens und Reduzierens und in der Zeit t vornehmen.

Die Fig. 3c zeigt das Einschalten und das Abschalten der Heizspannung VH ähnlich wie in Fig. 3a (60 Sekunden), nur mit dem Unterschied, dass zwischen dem Abschalten und dem nächsten Einschalten der Heizspannung ein Zeitraum von z.B. 60 Sekunden liegt. Auch hier kann der Rechner 2 Aenderungen sowohl in den Spannungswerten als auch in der Form und Zeit t vornehmen. Dies richtet sich, wie bereits mehrfach erwähnt, nach der Auswertung der Sensorsignale.

Die Fig. 3d zeigt ein plötzliches Einschalten der Heizspannung VH und ein langsames Absenken. Dies erfolgt ebenfalls in einer Zeit von 60 Sekunden. Anschliessend wird die Heizspannung wieder auf ihren maximalen Wert von z.B. 4 Volt eingeschaltet und langsam wieder abgesenkt. Auch bei diesem Beispiel kann der Rechner 2, je nach Auswertung der Sensorsignale, Aenderungen vornehmen, wie z.B. bei den Spannungswerten, der Form des Aufheizens bzw. Reduzierens und der Zeit t.

Die Fig. 3e zeigt das plötzliche Aufheizen der Heizspannung auf den Wert von 3 Volt. Die Heizspannung bleibt während einer Zeit von 60 Sekunden konstant und fällt dann wieder ab. Anschliessend wird der Gassensor ungefähr die gleiche Zeit nicht aufgeheizt. Die nächste Aufheizung erfolgt in gleicher Form aber mit einem höheren Spannungswert von z.B. 6 Volt. Hiermit soll dargelegt werden, dass der Rechner 2 bereits den Spannungswert geändert hat.

In den Figuren 3a bis 3e sind nur Beispiele gezeigt; es kann die Heizspannung in anderen Wellenzügen erhöht und gesenkt werden, wobei auch die Zeit t geändert werden kann.

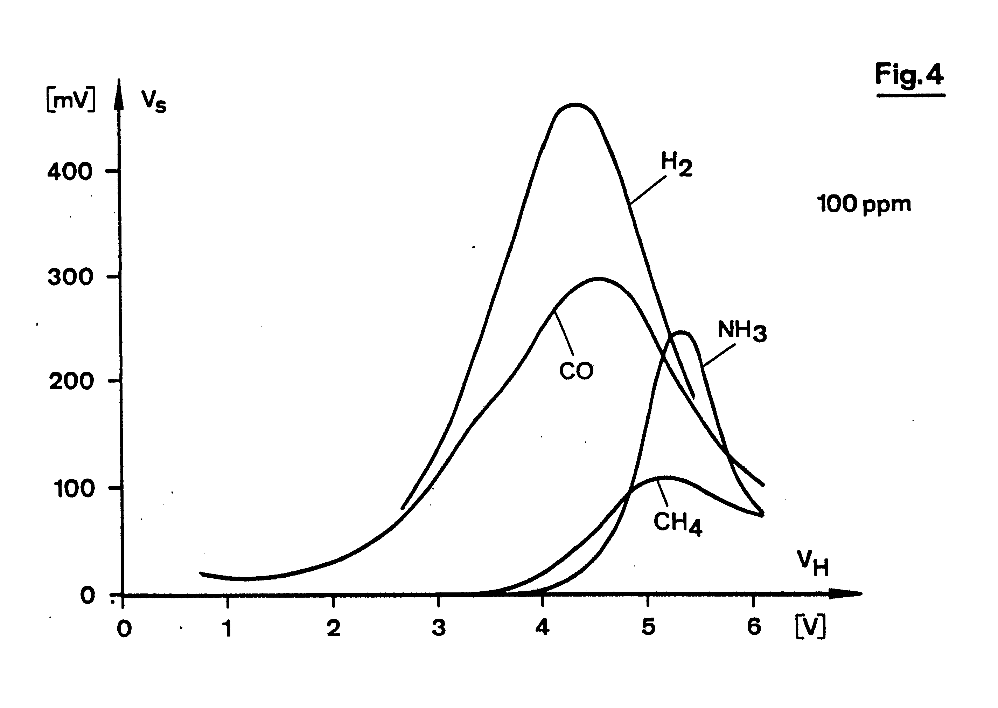

Fig. 4 zeigt Ansprechkurven für die Gase Wasserstoff ($H_2$), Kohlenmonoxid (CO), Ammoniak ($NH_3$) und Methan ($CH_4$), welche der Luft in einer Volumenkonzentration von 0.01 Vol % (= 100 ppm) einzeln beigemischt wurden. Die profile wurden mit dem in Fig. 3a angegebenen Temperaturzyklus aufgenommen. Man erkennt deutlich die verschiedenen Formen der Ansprechkurven, welche charakteristisch für die einzelnen Gase sind. Besonders auch liegen die Ansprechmaxima bei verschiedenen Hizspannungen. Die genaue Form der Kurven hängt von der Wärmekopplung zwischen Heizelement und Sensormaterial ab. Ebenso können die Kurven durch geeignete Katalysatorzusätze stark beeinflusst werden.

**Patentansprueche**

1. Alarmanlage zum Detektieren von Gaskomponenten, enthaltend mindestens ein Sensorelement (a, b, c, d), das mittels einer Heizeinrichtung (3, 4, 5, 6) auf unterschiedliche Temperaturen geheizt wird, und einer Auswerteschaltung zur Alarmgabe, dadurch gekennzeichnet, dass die Heizeinrichtung (3-6) derart steuerbar ist, dass die Temperatur des Sensorelementes (a, b, c, d) in mindestens zweimaligem Zyklus nach einem für die Analyse bestimmter Gaskomponenten optimierten und vorgegebenen Verlauf kontinuierlich von einem Anfangswert bis zu einem oberen Schwellwert erhöht und anschliessend wieder kontinuierlich auf den Anfangswert vermindert wird und dass die Steuer- und Auswerteschaltung (2, 4-13, 21, 22, 31, 81, 91, 92) derart aufgebildet ist, dass sie die vom Sensorelement (a, b, c, d) während der Temperaturzyklen erhaltenen, von der Zusammensetzung der zu untersuchenden Gasatmosphäre abhängenden Signalkurve mit gespeicherten Signalkurven, welche charakteristisch sind für eine bestimmte Konzentration einer bestimmten Gaskomponente, vergleichen und ggf. eine gefährliche Gaskomponenten-Konzentration durch die Alarmstufe (13) kenntlich machen kann.

2. Anlage nach Anspruch 1, dadurch gekennzeichnet, dass das Sensorelement (a, b, c, d) ein beheizbares Halbleiterelement aus Metalloxidkeramik ist, dessen elektrischer Leitwert sich in Abhängigkeit der umgebenden Gasatmosphäre ändert.

3. Anlage nach Anspruch 2, dadurch gekennzeichnet, dass das Sensorelement (a, b, c, d) mit Katalysatoren versehen ist, welche die Nachweisgenauigkeit bestimmter Gaskomponenten erhöhen.

4. Anlage nach Anspruch 1, dadurch gekennzeichnet, dass das Sensorelement (a, b, c, d) eine beheizbare mit Katalysator versehende Metalloxidkeramik ist, welche auf einem Temperaturmesser aufgebracht ist, mit welchem die durch die Wechselwirkung des Sensorelementes (a, b, c, d) mit der Gasatmosphäre erzeugte Temperaturerhöhung als Sensorsignal festgestellt wird.

5. Anlage nach Anspruch 1, dadurch gekennzeichnet, dass das Sensorelement (a, b, c, d) ein modifiziertes beheizbares Halbleiterelement ist, z.B. eine MIS-Diode oder ein MOS-Transistor, welches eine gasabhängige elektrische Charakteristik aufweist.

6. Anlage nach Anspruch 1, dadurch gekennzeichnet, dass das Sensorelement (a, b, c, d) ein beheizbares pyroelektrisches Element ist, welches mit einer gasadsorbierenden Schicht versehen ist, dessen pyroelektrischer Strom, welcher durch die Desorption von im Kühlzylkus adsorbierten Gase modifiziert wird, als Sensorsignal ausgewertet wird.

7. Anlage nach Ansprüchen 1 bis 6, dadurch gekenn-zeichnet, dass die Temperaturzyklen einzelner Sensorelemente (a, b, c, d) voneinander verschieden sind.

8. Anlage nach Ansprüche 1 bis 6, dadurch gekennzeichnet, dass die Schaltung (2, 21, 4, 5) derart ausgebildet ist, dass die Temperaturzyklen - sollten sich beim Vergleich der erhaltenen Signalkurven mit den gespeicherten Signalkurven Mehrdeutigkeiten ergeben - so lange variiert werden, bis der Vergleich zu einem eindeutigen Ergebnis führt.

9. Anlage nach Ansprüche 1 bis 8, dadurch gekennzeichnet, dass Anfangszeiten, Perioden und Temperaturverläufe der Temperaturzyklen einzelner Sensorelemente (a, b, c, d) voneinander verschieden sind.

**Claims**

1. An alarm system for detecting gas components comprising at least one sensor element (a, b, c, d) being heatable by a heating means (3, 4, 5, 6) to different temperatures and an electronic evaluation circuit for triggering an alarm, characterized in that the heating means (3 to 6) is controllable such that the temperature of the sensor element (a, b, c, d) in a cycle of st least two times in accordance with a predetermined pattern which pattern is optimized with respect to the analysis of selective ones of said gas components is elevated continuously from a starting value to an upper threshold value and thereafter decreased again continuously to said starting value and that the control and evaluation circuit (2, 4 to 13, 21, 22, 31, 81, 91, 92) is constructed in such manner that it is capable of comparing the curve of output signals received from the sensor element (a, b, c, d) during the temperature cycles and being dependent on the composition of the gas atmosphere to be analyzed with stored signal curves characteristic for a special concentration of a special gas component and, if necessary, indicating a dangerous concentration of a gas component by means of the alarm circuit.

2. Alarm system according to claim 1, characterized in that said sensor element (a, b, c, d) is a heatable semiconductor element consisting of a metal-oxide ceramic having an electric conductance which changes as a function of the environmental gas atmosphere.

3. Alarm system according to claim 2, characterized in that said sensor element (a, b, c, d) comprises catalysts optimizing the precision of the detection of predetermined ones of special gas components.

4. Alarm system according to claim 1, characterized in that said sensor element (a, b, c, d) is a heatable metaloxide ceramic comprising a catalyst and being applied to a temperature measuring device by means of which the temperature increase generated by the interaction of said sensor element (a, b, c, d) with said gas atmosphere is detected as an output signal of said sensor element.

5. Alarm system according to claim 1, characterized in that said sensor element (a, b, c, d) is a modified heatable semiconductor component e.g.a MIS-diode or a MOS-transistor having a gas dependent characteristic.

6. Alarm system according to claim 1, characterized in that said sensor element (a, b, c, d) is a heatable pyroelectric element provided with a gas absorbing layer, the pyroelectric current of which modified by desorbing gases being adsorbed at said heatable pyroelectric element during a cooling phase of said temperature cycles is evaluated as output signal.

7. Alarm system according to claims 1 to 6, characterized in that the temperature cycles for individual ones of said sensor elements (a, b, c, d) are different from each other.

8. Alarm system according to claims 1 to 6, characterized in that said electric circuit (2, 21, 4, 5) is constructed in such manner that the temperature cycles - in case the comparison of the obtained signal curves with the stored signal curve should result in ambiguities-are varied until the comparison leads to an unequivocal result.

9. Alarm system according to claims 1 to 8, characterized in that starting times, cycle periods and temperature patterns of said temperature cycles are different for individual ones of said sensor elements (a, b, c, d).

**Revendications**

1. Installation d'alarme pour détecter des composants gazeux contenant au moins un élément detecteur (a, b, c, d) qui est chauffé au moyen d'un dispositif de chauffage (3, 4, 5, 6) à différentes températures, ainsi qu'un montage d'exploitation pour déclencher l'alarme, caractérisée en ce que le dispositif de chauffage (3-6) peut être commandé de manière que la temperature de l'élément détecteur (a, b, c, d) puisse être augmentée de façon continue à partir d'une valeur initiale jusqu'à un seuil supérieur et puisse ensuite être réduite de nouveau de façon continue à la valeur initiale en un cycle répété au moins deux fois et suivant une allure optimisée et préfixée pour l'analyse de composants gazeux déterminés, et que le montage de commande et d'exploitation (2, 4-13, 21, 22, 31, 81, 91, 92) est réalisé de manière qu'il puisse comparer la courbe du signal reçu de l'élément détecteur (a, b, c, d) pendant les cycles de température, dépendante de la composition de l'atmosphere gazeuse à examiner, avec des courbes de signal stockées qui sont caractéristiques pour une concentration déterminée d'un composant gazeux déterminé, et puisse éventuellement signaler une concentration dangereuse d'un composant gazeux par un étage d'alarme (13).

2. Installation selon la revendication 1, caractérisée en ce que l'élément (a, b, c, d) est un élément semi-conducteur susceptible d'être chauffé, constitué par de la céramique à oxydesmétalliques,et dont la conductivité electrique change en fonction de l'atmosphère gazeuse environnante.

3. Installation selon la revendication 2, caractérisée en ce que l'élément détecteur (a, b, c, d) est pourvu de catalyseurs qui augmentent la précision, de détection de composants gazeux déterminés.

4. Installation selon la revendication 1, caractérisée en ce que l'élément détecteur (a, b, c, d) est un élément céramique à oxyde métallique susceptible d'être chauffé et pourvu de catalyseur, qui est disposé sur un mesureur de température au moyen duquel l'élévation de température produite par l'interaction de l'élément détecteur (a, b, c, d) avec l'atmosphère gazeuse est déterminée en tant que signal du détecteur.

5. Installation selon la revendication 1, caractérisée en ce que l'élément détecteur (a, b, c, d) est un élément semi-conducteur modifié, susceptible d'être chauffé, par exemple une diode MIS ou un transistor MOS, qui présente une caractéristique électrique dépendant du gaz.

6. Installation selon la revendication 1, caractérisée en ce que l'élément détecteur (a, b, c, d) est un élément pyroelectrique susceptible d'être chauffé, qui est pourvu d'une couche adsorbant le gaz, dont le courant pyroélectrique, qui est modifié par la desorption de gaz adsorbés dans le cycle de refroidissement, est exploité en tant que signal du detecteur.

7. Installation selon les revendications 1 à 6, caractérisée en ce que les cycles de température de différents éléments détecteurs (a, b, c, d) diffèrent les uns des autres.

8. Installation selon les revendications 1 à 6, caractérisée en ce que le montage (2, 21, 4, 5) est réalisé de manière que les cycles de température - au cas où il y aurait des ambiguïtés lors de la comparaison des courbes des signaux obtenues avec les courbes de signaux stockées - sont variés jusqu'à ce que la comparaison fournisse un résultat univoque.

9. Installation selon les revendications 1 à 8, caractérisée en ce que les temps de commencement, es périodes et les allures de température des cycles de température diffèrent pour différents éléments détecteurs (a, b, c, d).

Fig.1

**Fig. 2**

μ - Rechner

# Fig. 3

Fig. 4

100 ppm